# FASCICULE DE BREVET EUROPEEN

(11) **EP 1 141 968 B1**
(45) Date de publication et mention de la délivrance du brevet: **17.05.2006**
(21) Numéro de dépôt: 99959467.4
(22) Date de dépôt: 09.12.1999
(51) Int. Cl.: G21C 3/352, G21C 3/322

(54) **GRILLE-ENTRETOISE D' ASSEMBLAGE COMBUSTIBLE DE REACTEUR NUCLEAIRE**
ABSTANDSGITTER ZUM EINSATZ IN EINEM KERNREAKTORBRENNSTABBÜNDEL
SPACER GRID FOR A NUCLEAR REACTOR FUEL ASSEMBLY

(30) Priorité: 14.12.1998 FR 9815776
(43) Date de publication de la demande: 10.10.2001
(73) Titulaire: Framatome ANP, 92400 Courbevoie (FR)
(72) Inventeur: IMBERT, Pierre, F-69680 Chassieu (FR)
(74) Mandataire: Bouget, Lucien
(86) Numéro de dépôt international: PCT/FR1999/003077
(87) Numéro de publication internationale: WO 2000/036609

(56) Documents cités:
- US-A- 5 299 245
- US-A- 5 307 393
- US-A- 5 440 599

## Description

L'invention concerne une grille-entretoise pour un assemblage de combustible d'un réacteur nucléaire refroidi par de l'eau et en particulier d'un réacteur nucléaire refroidi par de l'eau sous pression.

Les assemblages de combustible de réacteurs nucléaires refroidis par de l'eau sont généralement réalisés sous la forme d'un faisceau de crayons combustibles, c'est-à-dire de tubes métalliques remplis par des pastilles en matériau combustible, disposés à l'intérieur d'une ossature et constituant un faisceau dans lequel les crayons sont parallèles entre eux.

L'ossature de l'assemblage de combustible comporte en particulier une pluralité de grilles-entretoises disposées à une certaine distance l'une de l'autre suivant la direction axiale du faisceau de crayons de l'assemblage de combustible.

Chacune des grilles-entretoises assurant le maintien des crayons de combustible dans des directions transversales perpendiculaires à la direction axiale, est constituée par des plaquettes métalliques entrecroisées et assemblées entre elles, sensiblement à angle droit qui délimitent un réseau de cellules de crayons à mailles carrées, destinées à recevoir chacune un crayon de combustible traversant la cellule dans la direction axiale.

Le crayon est maintenu dans une disposition sensiblement centrée par des éléments de retenue tels que des bossettes et ressorts, en saillie vers l'intérieur par rapport aux parois de la cellule de crayon.

Les assemblages de combustible, qui sont généralement de forme prismatique droite à base carrée, sont disposés, en service dans le réacteur nucléaire, avec leur direction axiale verticale. L'eau de refroidissement du réacteur nucléaire circule au contact des crayons de combustible de l'assemblage, dans la direction axiale verticale et de bas en haut. L'eau de refroidissement est répartie, à la base de l'assemblage de combustible, dans des canaux de circulation d'eau, appelés sous-canaux, délimités chacun par quatre crayons de combustible voisins.

L'eau de refroidissement traverse également chacune des cellules de la grille dans la direction axiale depuis le bord inférieur jusqu'au bord supérieur de la cellule.

Dans le réseau des grilles-entretoises, certaines cellules sont occupées par des tubes-guides faisant partie de l'ossature de l'assemblage de combustible, qui sont substitués à certains crayons de combustible du faisceau de l'assemblage de combustible.

Les grilles-entretoises ont pour but, en particulier, d'assurer le maintien transversal des crayons et de coopérer avec les tubes-guides pour constituer l'ossature de l'assemblage de combustible.

Les grilles-entretoises ont également une fonction importante supplémentaire qui consiste à favoriser le contact et les échanges thermiques entre l'eau de refroidissement en circulation dans l'assemblage de combustible et la surface extérieure des crayons. En particulier, les grilles-entretoises doivent être conçues de manière à retarder l'apparition du flux critique au contact des crayons, c'est-à-dire un régime de circulation et d'échange thermique de l'eau de refroidissement à la surface des crayons à la limite du régime d'échange thermique normal.

Lorsqu'on est en présence de conditions thermo-hydrauliques consécutives à l'apparition du flux critique, il peut apparaître des points chauds au contact des crayons de combustible, dans certains sous-canaux de circulation du fluide de refroidissement. Les crayons de combustible peuvent être endommagés et les conditions de refroidissement du réacteur nucléaire peuvent devenir insuffisantes ou inacceptables.

Dans la réalisation des grilles-entretoises des assemblages de combustible, on s'est donc attaché à améliorer les performances thermo-hydrauliques des grilles-entretoises et en particulier à réaliser ces grilles de manière à éloigner les risques d'apparition du flux critique. Le phénomène d'apparition du flux critique n'est décrit que par des lois semi-empiriques et il n'a pas été possible, jusqu'ici, d'établir un lien très clair entre les performances des grilles en ce qui concerne le flux critique et la capacité des grilles à favoriser le mélange des différents courants d'eau de refroidissement circulant dans l'assemblage de combustible, par déviation transversale des courants d'eau. Cependant, on a pu observer que les grilles-entretoises des assemblages de combustible sont d'autant plus performantes en ce qui concerne le retard à l'apparition du flux critique, qu'elles possèdent des dispositifs mélangeurs efficaces des flux d'eau de refroidissement.

Jusqu'ici on a proposé d'utiliser des dispositifs mélangeurs constitués par des ailettes de mélange disposées en saillie vers le haut, par rapport au bord supérieur des parois des cellules de crayons des grilles-entretoises. Les ailettes sont découpées dans les plaquettes au moment de la fabrication de la grille-entretoise et repliées vers l'intérieur des cellules du réseau à mailles carrées de la grille-entretoise.

Dans chacune des cellules de crayon, deux parois de cellules opposées et parallèles comportent chacune une ailette de mélange, dans deux zones situées au voisinage de deux angles de la cellule de crayon disposés sur une même diagonale, les ailettes de mélange étant repliées vers l'intérieur de la cellule. Les deux autres parois de la cellule, parallèles entre elles, comportent également des ailettes de mélange dans deux zones voisines des angles de la cellule situés sur la seconde diagonale de la cellule. Ces deux ailettes sont repliées vers l'extérieur de la cellule, c'est-à-dire vers deux cellules voisines du réseau.

De ce fait, les ailettes de mélange de deux cellules de crayons voisines sont disposées à 90° les unes par rapport aux autres et il en est de même dans les cellules hydrauliques de deux sous-canaux voisins de circulation d'eau de refroidissement.

Les ailettes de mélange ont un double but :
- d'une part, elles favorisent les échanges de flux d'eau de refroidissement entre les sous-canaux de l'assemblage et ainsi, elles minimisent les différences d'enthalpie entre les canaux qui sont engendrées par les gradients de puissance dans le coeur du réacteur nucléaire,
- d'autre part, elles accroissent la turbulence de l'eau de refroidissement, au contact des crayons, lorsque celle-ci traverse la grille.

Dans la disposition habituelle des ailettes de mélange qui a été décrite plus haut, à chaque intersection de parois de cellules de la grille-entretoise commune à quatre cellules renfermant chacune un crayon de combustible, on se trouve en présence de deux ailettes dirigées suivant un même axe et orientées dans des sens opposés vers l'intérieur de deux cellules de crayon. De ce fait, l'eau de refroidissement circulant dans le sous-canal est déviée par les ailettes, en direction de l'entrefer, c'est-à-dire de l'espace entre deux crayons de combustible faisant face à l'ailette de mélange.

La disposition à 90° de chaque couple d'ailettes d'un sous-canal à un sous-canal voisin permet d'assurer l'alimentation de chacun des entrefers entre crayons de combustible.

L'efficacité des ailettes de mélange des grilles de combustible est directement liée à la disposition du réseau d'ailettes et à la géométrie des ailettes. Cependant, la géométrie de chacune des ailettes, c'est-à-dire la forme, la dimension et l'inclinaison de l'ailette, ne peut être choisie uniquement en fonction de critères hydrauliques.

En effet, un espace suffisant doit être maintenu entre les ailettes et les crayons, pour éviter tout contact entre l'ailette et le crayon au moment du montage du crayon et pendant son fonctionnement dans le coeur du réacteur nucléaire. En effet, un contact entre l'ailette et le crayon risquerait de détériorer la gaine tubulaire renfermant les pastilles de combustible.

Il est également nécessaire de respecter certaines exigences relatives au montage et à l'assemblage de la grille elle-même, pour rendre possible l'engagement des plaquettes de grilles les unes dans les autres en limitant les risques d'accrochage de l'ailette avec d'autres éléments en saillie par rapport aux plaquettes, tels que les bossettes ou ressorts des cellules de crayons.

Les ailettes de mélange des grilles-entretoises sont donc optimisées et leur efficacité ne peut plus être accrue sans risque de détérioration des conditions de fabrication et de sûreté de fonctionnement de la grille-entretoise.

On a proposé dans les US-A-5,299,245 et US-A-5,307,393 d'adjoindre aux ailettes de mélange découpées suivant le bord supérieur des parois de cellules de grilles-entretoises des éléments également découpés dans les parois suivant les bords de parois pour améliorer l'effet des ailettes de mélange. Dans le US-A-5,307,393, les éléments sont constitués par de petits onglets rabattus dans le sens inverse de l'ailette de mélange située sur le même bord et coopérant avec une ailette de mélange d'une cellule voisine. Dans le US-A-5,299,245, on a proposé de replier des petites ailettes de forme triangulaire découpées sur un même bord de part et d'autre de la paroi de cellule, respectivement vers l'une et l'autre des deux cellules séparées par la paroi. De tels dispositifs n'ont pas permis réellement d'améliorer l'efficacité des ailettes de mélange auxquelles ils sont associés.

Le but de l'invention est donc de proposer une grille-entretoise pour un assemblage de combustible d'un réacteur nucléaire refroidi par de l'eau, constituée par une pluralité de plaquettes entrecroisées et assemblées entre elles sensiblement à angles droits, délimitant un réseau de cellules de crayons à mailles carrées destinées à recevoir chacune un crayon de combustible traversant la cellule dans une direction axiale et maintenu dans une disposition sensiblement centrée par des éléments de retenue en saillie vers l'intérieur par rapport aux parois de la cellule, chaque cellule de crayon de la grille-entretoise comportant une première extrémité axiale inférieure et une seconde extrémité axiale supérieure, dans le sens de circulation de l'eau de refroidissement dans l'assemblage de combustible, et deux parois opposées l'une à l'autre présentant sur leurs bords supérieurs une ailette de mélange constituée par une partie de paroi découpée en saillie vers le haut, par rapport au bord supérieur et repliée vers l'intérieur de la cellule, au voisinage d'un premier et d'un second angles de la cellule disposés suivant une première diagonale de la cellule, les deux autres parois opposées de la cellule comportant, au voisinage de deux angles disposés sur une seconde diagonale de la cellule, deux ailettes repliées vers l'extérieur de la cellule de crayon, cette grille-entretoise présentant une efficacité accrue pour établir des conditions favorables de circulation et d'échange thermique de l'eau de refroidissement, de manière à augmenter la capacité d'extraction de chaleur de l'eau de refroidissement et les caractéristiques de puissance du réacteur nucléaire.

Dans ce but, les parois des cellules de crayons comportent, suivant chacun de leurs bords supérieurs, dans une zone ne comportant pas d'ailettes de mélange, un élément complémentaire de déflexion découpé dans la matière de la paroi de la cellule et placé dans l'une des dispositions suivantes : a, dans le prolongement vertical de la paroi de la cellule, b, replié vers l'intérieur ou l'extérieur de la cellule dans le même sens que l'ailette de mélange située sur le même bord supérieur d'une paroi de la cellule.

Afin de bien faire comprendre l'invention, on va maintenant décrire, à titre d'exemples, en se référant aux figures jointes en annexe, deux modes de réalisation d'une grille-entretoise suivant l'invention et, de manière comparative, une grille-entretoise suivant l'art antérieur.
La figure 1 est une vue de dessus d'une partie d'une grille-entretoise suivant l'art antérieur.
La figure 2 est une vue agrandie d'un détail de la figure 1.
La figure 3 est une vue en perspective d'une partie d'une grille-entretoise suivant l'invention et suivant un premier mode de réalisation.
La figure 4 est une vue de face, en élévation, d'une partie supérieure d'une plaquette de la grille représentée sur la figure 3.
La figure 5 est une vue de dessus d'une partie d'une grille-entretoise suivant l'invention et suivant un second mode de réalisation.
La figure 6 est une vue agrandie d'une partie de la grille représentée sur la figure 5.
La figure 7 est une vue en perspective d'une partie supérieure d'une paroi de cellule de la grille représentée sur la figure 5.
La figure 8 est une vue de côté suivant 8 de la figure 7.

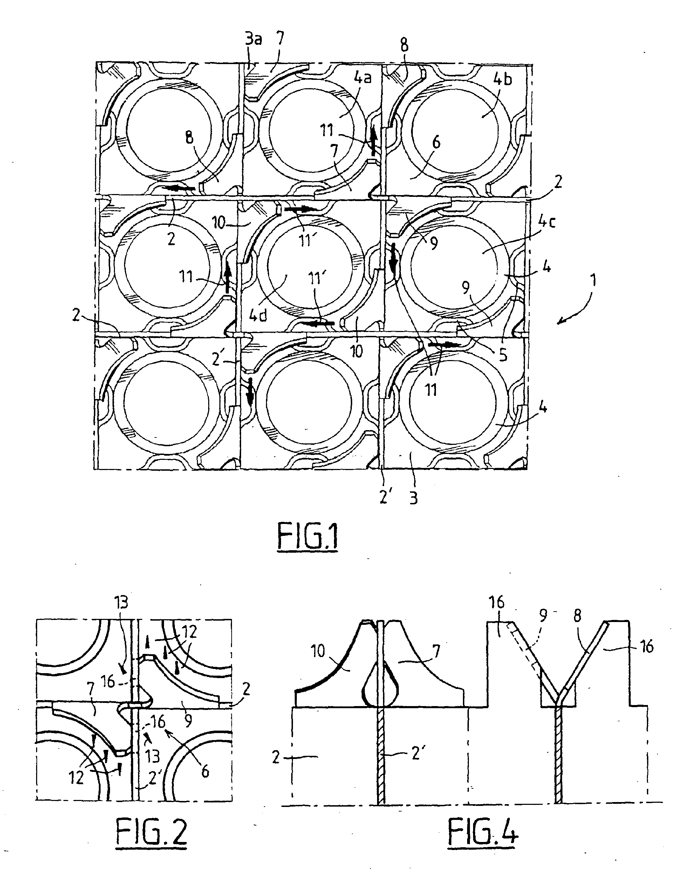

Sur la figure 1, on a représenté une partie d'une grille-entretoise d'un assemblage de combustible suivant l'art antérieur désignée de manière générale par le repère 1.

La grille 1 est constituée par des plaquettes métalliques 2 et 2' présentant respectivement une première direction et une seconde direction faisant entre elles un angle de 90°, les plaquettes 2 et 2' étant entrecroisées et assemblées entre elles sous la forme d'un réseau à mailles carrées constitué par des cellules de crayons 3 destinées à recevoir chacune un crayon de combustible 4.

Chacune des cellules de crayons 3, de forme carrée, comporte, en saillie sur ses parois internes, des bossettes et ressorts 5 de maintien du crayon 4 qui traverse la cellule 3 dans une direction axiale perpendiculaire au plan de la figure 1, et dans une disposition sensiblement centrée.

L'eau de refroidissement du réacteur circule, en fonctionnement, dans la direction axiale et de bas en haut, c'est-à-dire en direction de l'extrémité supérieure de la grille-entretoise de l'assemblage de combustible représentée sur la figure 1.

L'eau de refroidissement circule, à l'intérieur de chacune des cellules 3 de la grille-entretoise 1, en contact avec la surface extérieure du crayon de combustible 4.

L'eau de refroidissement du réacteur circule également, dans tout le faisceau de crayons de combustible, sous la forme de courants parcourant chacun un sous-canal délimité par quatre crayons de combustible voisins tels que les crayons 4a, 4b, 4c et 4d représentés sur la figure 1.

Sur la figure 1, on a désigné par le repère 6, la cellule hydraulique correspondant au canal délimité par les crayons 4a, 4b, 4c et 4d, c'est-à-dire la section du sous-canal perpendiculaire à la direction axiale des crayons et du faisceau constitué par les crayons 4 parallèles entre eux.

Chacune des cellules 3 de la grille-entretoise comporte, dans ses parois en saillie au-dessus de son bord supérieur, deux ailettes repliées vers l'intérieur de la cellule et deux ailettes repliées vers l'extérieur de la cellule, au-dessus de deux cellules voisines.

Par exemple, dans le cas de la cellule 3a dans laquelle est engagé le crayon 4a, le bord supérieur des deux parois de la cellule constituée par des plaquettes 2 a été découpé de manière à constituer deux ailettes 7 profilées en saillie vers le haut, au voisinage de deux angles de la cellule 3 disposés suivant une première diagonale de la cellule. Les deux ailettes 7 sont repliées vers l'intérieur au-dessus de la cellule 3. Les deux parois de la cellule 3 constituées par des plaquettes 2' perpendiculaires aux plaquettes 2, qui constituent des parois communes à la cellule 3 et à deux cellules voisines disposées à gauche et à droite de la cellule 3 sur la figure 1, ont été découpées pour constituer des ailettes 8 au voisinage de deux angles de la cellule 3 disposés sur une seconde diagonale de la cellule 3. Les ailettes 8 sont repliées vers l'extérieur par rapport à la cellule 3, au-dessus de la cellule voisine située à gauche et au-dessus de la cellule voisine située à droite de la cellule 3, respectivement.

En considérant l'intersection des parois des quatre cellules voisines renfermant respectivement les crayons de combustible 4a, 4b, 4c et 4d, ces parois constituant quatre angles dièdres à l'intérieur de la cellule hydraulique 6 de circulation du fluide de refroidissement, la plaquette 2 est découpée au niveau de l'intersection pour constituer deux ailettes 7 et 9 qui sont alignées suivant le bord supérieur de la plaquette 2 et repliée dans des sens opposés de part et d'autre de cette plaquette. La plaquette 2' ne comporte pas d'ailette au niveau de la cellule hydraulique 6.

Les ailettes de mélange (telles que 7 et 9 et 8 et 10) ont des dispositions se déduisant l'une de l'autre par une rotation de 90° autour de l'arête commune aux parois de cellules, d'un canal à un canal voisin.

De même, en considérant deux cellules 3 de crayons quelconques voisines l'une de l'autre, les dispositions des ailettes de mélange telles que 7, 8, 9 ou 10 se déduisent l'une de l'autre par une rotation de 90° autour de l'axe de la cellule.

Lorsque l'eau de refroidissement du réacteur nucléaire est mise en circulation dans l'assemblage de combustible et traverse la grille-entretoise 1 à l'intérieur des cellules 3 de crayons et les cellules hydrauliques 6, les ailettes de mélange telles que 7, 8, 9 et 10 dirigent l'écoulement, à la sortie de la grille-entretoise, vers l'entrefer entre deux crayons voisins, comme représenté par les flèches 11.

La présence des ailettes de mélange telles que 7, 8, 9 et 10 permet de dévier transversalement le flux d'eau de refroidissement, par rapport à la direction axiale de l'assemblage de combustible, de sorte que les échanges entre sous-canaux 6 voisins sont favorisés et que la turbulence du flux d'eau traversant la grille-entretoise est accrue, ce qui favorise les échanges thermiques avec les crayons de combustible.

Sur la figure 2, on a représenté une intersection de parois de la grille-entretoise, à l'intérieur d'une cellule hydraulique 6 dans laquelle le flux d'eau de refroidissement est dévié par les ailettes 7 et 9 alignées suivant une plaquette 2 et repliées en sens inverse de part et d'autre de la plaquette 2.

On a représenté, sous la forme des flèches 12, un écoulement transversal principal produit par les ailettes 7 et 9 et par les flèches 13, un écoulement secondaire transversal de plus faible intensité que l'écoulement 12, dévié latéralement par rapport à l'écoulement 12. L'écoulement secondaire 13 est trop faible pour promouvoir efficacement un transfert d'eau de refroidissement en direction d'un sous-canal adjacent au sous-canal dont la cellule hydraulique est représentée sur la figure 2.

En revanche, l'écoulement secondaire 13 limite le débit et l'efficacité du courant principal 12. L'effet des ailettes de mélange telles que 7 et 9 est donc limité par l'existence du courant secondaire.

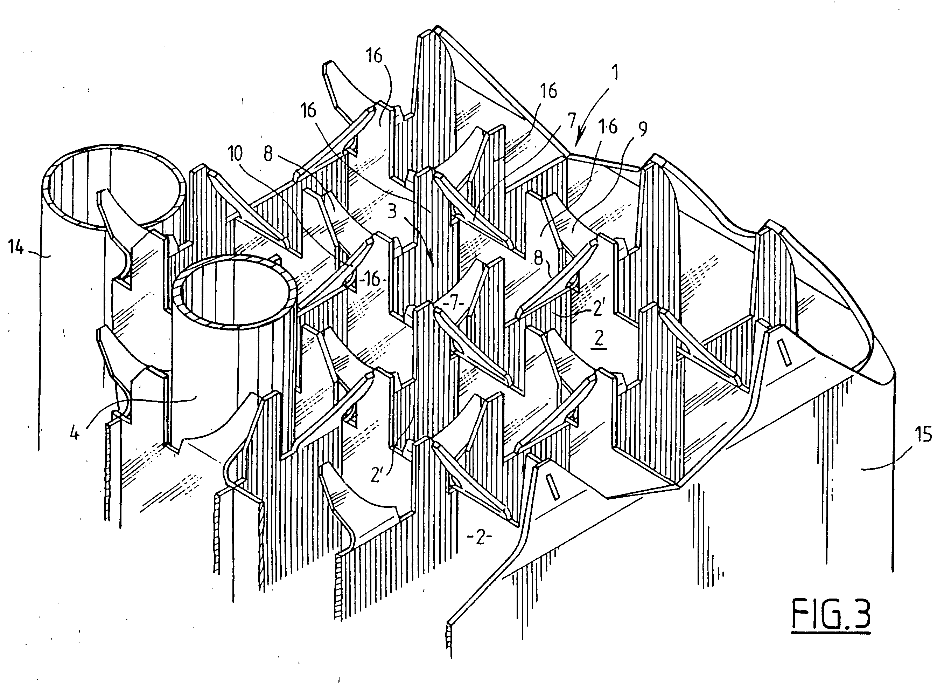

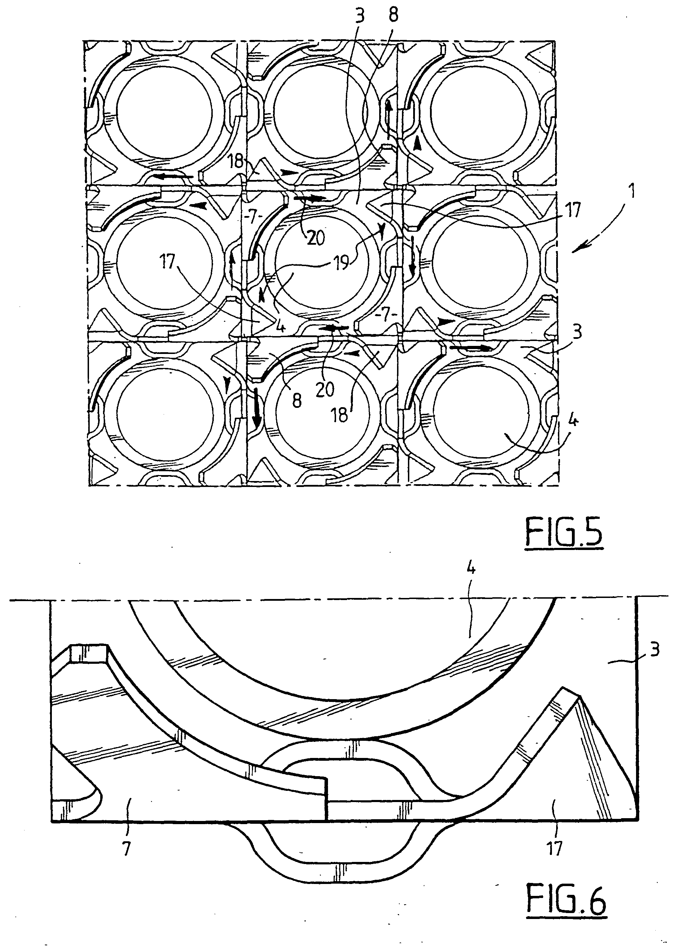

Pour limiter ou supprimer l'écoulement secondaire, et donc accroître l'effet de l'écoulement principal, selon l'invention, on peut utiliser la disposition représentée sur les figures 3 et 4.

Les éléments correspondants des grilles-entretoises 1, représentés respectivement sur les figures 1 et 2 et sur les figures 3 et 4, sont affectés des mêmes repères.

La grille-entretoise 1 représentée sur la figure 3 est constituée par des plaquettes métalliques 2 et 2' disposées suivant deux directions à 90°, entrecroisées et assemblées pour constituer un réseau à mailles carrées de cellules de crayons 3 de forme globalement parallélépipèdique.

La grille 1 est entourée, à sa partie périphérique, par une ceinture 15 assemblée avec les plaquettes 2 et 2' de la grille et assurant la fermeture des cellules périphériques délimitées par les plaquettes 2 et 2'.

Chacune des cellules de la grille est destinée à recevoir soit un crayon combustible 4, soit un tube-guide 14. On n'a représenté qu'un crayon combustible 4 et un tube-guide 14, de manière à rendre plus apparents les dispositifs de guidage d'eau de refroidissement de la partie supérieure de la grille. Bien entendu, l'assemblage de combustible comporte des crayons introduits axialement dans l'ensemble des cellules 3 de la grille, à l'exception de quelques cellules réservées à des tubes-guides.

Sur la figure 3, on voit la partie supérieure de la grille-entretoise 1 qui constitue l'extrémité de sortie de l'eau de refroidissement ayant traversé la grille-entretoise. La partie supérieure de la grille-entretoise 1 comporte des éléments de guidage et de mélange d'eau de refroidissement prolongeant vers le haut, au-dessus de son bord supérieur droit, chacune des parois des cellules 3 de la grille constituées par des plaquettes 2 et 2'.

Les éléments de guidage et de mélange de la partie supérieure de la grille-entretoise 1 comportent tout d'abord des ailettes de mélange 7, 8, 9 et 10 telles que décrites en regard des figures 1 et 2. La grille 1 suivant l'invention présente en effet une structure générale analogue à la structure de la grille selon l'art antérieur représentée sur la figure 1 et comporte en particulier des ailettes de mélange 7, 8, 9 et 10 dont la forme et la disposition par rapport à chacune des parois de cellules de crayons et par rapport aux intersections des parois dans les cellules hydrauliques sont identiques à la forme et à la disposition des ailettes de mélange décrites dans le cas de la grille selon l'art antérieur représenté sur la figure 1.

De plus; la grille 1 suivant l'invention comporte des éléments complémentaires pour supprimer l'écoulement secondaire d'eau de refroidissement, tel que décrit en regard de la figure 2, au niveau de chacune des intersections de paroi, dans une cellule hydraulique et un sous-canal de circulation d'eau de refroidissement. Ces éléments complémentaires sont constitués par des ailettes 16 en saillie vers le haut par rapport au bord supérieur de chacune des parois de cellule et découpées dans les plaquettes métalliques 2 et 2', de manière à présenter une forme triangulaire ou trapézoïdale.

Les ailettes complémentaires 16 ne sont pas repliées en direction des cellules et sont disposées dans le plan de la paroi qu'elles prolongent vers le haut.

Chacune des ailettes complémentaires droites 16 est disposée suivant le bord supérieur d'une paroi de cellule de crayon, dans une zone d'extrémité de ce bord de paroi ne comportant pas d'ailettes de mélange, c'est-à-dire dans une zone située à l'opposé de l'ailette de mélange sur le bord supérieur de la paroi de cellule, au voisinage d'un angle de la cellule.

Les bords d'extrémité extérieurs des deux ailettes de mélange 7 repliés vers l'intérieur de la cellule 3 viennent s'appliquer, lors de leur pliage, contre la surface intérieure d'une ailette complémentaire 16, le long d'un bord de l'ailette 16 oblique par rapport à la direction axiale, vers l'extérieur et vers le bas.

Sur les deux autres ailettes complémentaires 16 des deux autres parois de la cellule 3 viennent s'appliquer le long d'un bord oblique de l'ailette complémentaire 16 sur la surface extérieure de l'ailette complémentaire (par rapport à la cellule 3), deux ailettes de mélange 9 et 10 de cellule voisines de la cellule 3.

De cette manière, chacune des ailettes complémentaires 16 forme, avec une ailette de mélange 7, 9 ou 10, un dièdre. Deux dièdres sont ainsi réalisés suivant deux angles de la cellule disposés sur une diagonale et suivant deux angles de deux cellules de crayon voisines de la cellule 3. Les ailettes de mélange peuvent être soudées sur les ailettes complémentaires 16, le long des bords obliques.

Les parois complémentaires 16 assurent l'arrêt des écoulements complémentaires 13 d'eau de refroidissement dans deux angles de chacune des intersections de parois, à l'intérieur d'une cellule hydraulique, comme il est visible sur la figure 2, où l'on a représenté en pointillés, deux ailettes complémentaires 16 découpées dans la partie supérieure de la plaquette 2'. On voit qu'ainsi le flux d'eau de refroidissement est entièrement dirigé vers les entrefers des crayons de combustible disposés de part et d'autre du sous-canal et de la cellule hydraulique 6 représentée sur la figure 2, lorsqu'on prévoit des ailettes complémentaires droites 16.

La figure 4 montre de quelle manière les bords extérieurs des ailettes de mélange 7, 10, 8 et 9 viennent s'appuyer contre le bord oblique d'une ailette complémentaire 16 d'une paroi de cellule découpée dans une plaquette 2 ou une plaquette 2'.

Sur la figure 5, on a représenté une grille-entretoise 1 selon un second mode de réalisation de l'invention. Les éléments correspondants de la grille représentée sur la figure 5 d'une part et des grilles selon l'art antérieur représentées sur la figure 1 et selon le premier mode de réalisation de l'invention représenté sur la figure 3 d'autre part, sont affectés des mêmes repères.

Chacune des cellules de crayons 3 de la grille 1 telle que la cellule centrale représentée sur la figure 5 comporte, suivant les bords supérieurs de ses parois, deux ailettes de mélange 7 repliées vers l'intérieur de la cellule et deux ailettes de mélange 8 repliées vers l'extérieur, au-dessus de deux cellules voisines de la cellule 3. Les ailettes de mélange 7 et les ailettes de mélange 8 sont disposées respectivement au voisinage de deux angles de la cellule 3 disposés suivant une première diagonale et au voisinage de deux angles de la cellule 3 disposés suivant la seconde diagonale de la cellule.

La structure générale de la grille-entretoise selon le second mode de réalisation représenté sur la figure 5 et la disposition des ailettes de mélange 7 et 8 de cette grille-entretoise sont donc analogues à la structure générale et aux dispositions correspondantes de la grille-entretoise selon l'art antérieur et de la grille-entretoise selon le premier mode de réalisation.

Dans le cas d'une grille-entretoise selon l'art antérieur, telle que représentée sur la figure 1, à l'intérieur de chacune des cellules de crayons, par exemple la cellule 3 de crayon située au centre de la portion de grille représentée sur la figure 1, l'eau de refroidissement traversant la cellule de la grille-entretoise dans la direction axiale est déviée par les ailettes de mélange 10 qui sont inclinées en sens opposés vers l'intérieur de la cellule, à partir de deux parois opposées de cette cellule. De ce fait, les ailettes 10 ont tendance à imposer un mouvement de rotation à l'eau de refroidissement autour du crayon 4d, comme indiqué par les flèches 11'.

Du fait de la disposition des ailettes dans les cellules successives, le sens de rotation de l'eau de refroidissement d'une cellule à une cellule voisine est inversé.

Cependant, dans les deux angles de la cellule suivant lesquels ne sont pas disposées d'ailettes de mélange repliées vers la cellule, l'écoulement axial d'eau de refroidissement ne subit aucune déviation. Aucune composante transversale de vitesse n'est imposée à l'écoulement et l'amorce du mouvement de rotation autour du crayon imposé par les ailettes 10 est interrompue.

De manière à favoriser la mise en rotation du flux d'eau de refroidissement autour du crayon 4, comme il est visible sur la figure 5, dans le cas du second mode de réalisation de l'invention, on prévoit des volets de guidage 17 de l'eau de refroidissement repliés vers l'intérieur de la cellule 3, dans les angles de la cellule ne comportant pas d'ailettes de mélange 7.

Comme il est visible sur les figures 6, 7 et 8, les volets 17 sont obtenus par pliage vers l'intérieur de la cellule 3 de parties des parois, situées dans les angles supérieurs de ces parois.

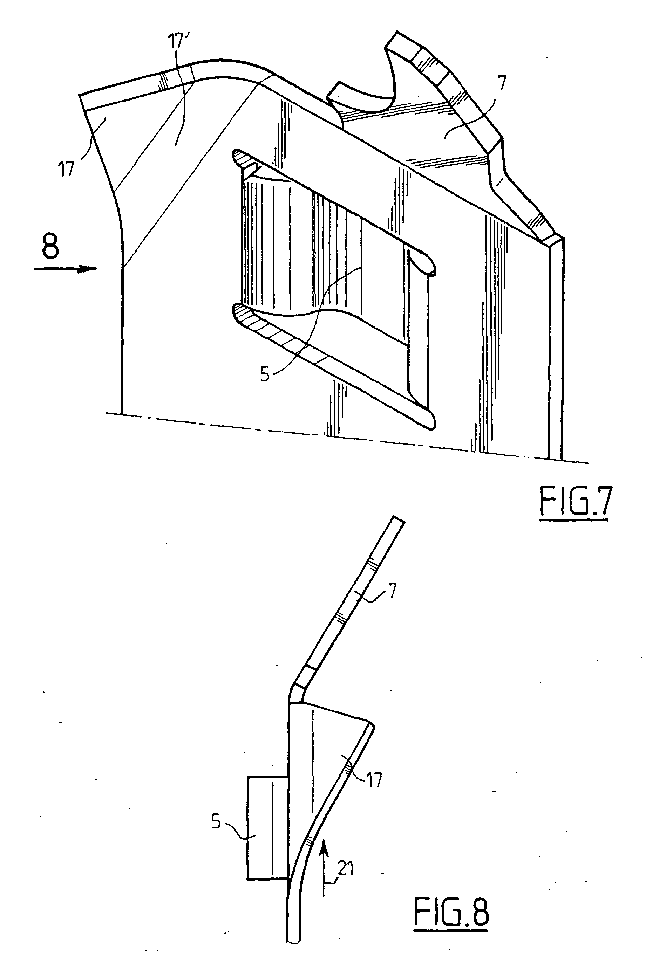

Le pliage est réalisé suivant une ligne de pliage 17' inclinée par rapport à la direction axiale verticale de la cellule, comme il est visible sur la figure 7.

Les volets 17 sont réalisés dans les parois de la cellule 3 comportant déjà les ailettes de mélange 7 repliées vers l'intérieur de la cellule. Les deux autres parois de la cellule comportent des ailettes de mélange 8 et des volets 18, analogues aux volets 17, repliés vers l'extérieur, au-dessus de cellules voisines de la cellule 3. Dans tous les cas, les volets 17 et 18 sont repliés dans le même sens que les ailettes de mélange situées sur le même bord d'une paroi de cellule

La présence, dans la cellule 3, de volets 17 inclinés par rapport à la direction axiale verticale, dans les zones d'angles ne comportant pas d'ailettes de mélange, favorise la mise en rotation de l'écoulement d'eau de refroidissement dans la cellule, autour du crayon 4, les flèches 20 montrant la déflexion transversale du flux produite par les ailettes de mélange 7 et les flèches 19 l'effet complémentaire de déviation transversale donné par les volets inclinés 17.

De plus, comme il est visible sur la figure 8, avant de rencontrer l'ailette de mélange 7, le flux d'eau vertical dont la direction et le sens sont donnés par la flèche 21 vient en contact avec le volet 17 qui se trouve en amont par rapport à l'ailette de mélange 7. Le volet 17 oriente l'écoulement principal d'eau dans la cellule, de manière qu'il soit dirigé vers l'ailette de mélange 7. On renforce ainsi l'effet de mélange entre les sous-canaux hydrauliques voisins.

La grille-entretoise suivant l'invention présente dans tous les cas l'avantage de permettre un accroissement de l'échange thermique entre les canaux de circulation d'eau de refroidissement à l'intérieur de l'assemblage de combustible et de favoriser les échanges thermiques entre l'eau de refroidissement et les crayons. Les éléments complémentaires de déflexion du flux d'eau de refroidissement se combinent avec les ailettes de mélange connues pour obtenir ces deux effets.

Bien entendu, il n'est pas possible d'utiliser simultanément, sur une même grille, les éléments complémentaires de déflexion du flux d'eau de refroidissement suivant le premier et suivant le second modes de réalisation, dans la mesure où ces éléments complémentaires utilisent de la matière des plaquettes constituant les parois de cellules de la grille situées dans les mêmes zones des parois.

Les opérations nécessaires pour réaliser la fabrication de la grille-entretoise suivant l'invention ne sont pas sensiblement plus complexes que les opérations correspondantes nécessaires pour fabriquer une grille suivant l'art antérieur.

Dans le cas du premier mode de réalisation, il suffit de prévoir, lors du découpage des plaquettes, les ailettes supplémentaires 16 en saillie par rapport au bord supérieur des parois de grilles, dans chacune des zones qui ne sont pas occupées par une ailette de mélange. Dans le cas de la grille-entretoise selon le second mode de réalisation, on réalise également un découpage de la plaquette pour délimiter les volets 17 et 18, mais il est nécessaire, dans ce cas, de prévoir une opération supplémentaire de pliage des volets et le soudage des plaquettes entre elles pour réaliser la grille-entretoise est légèrement plus complexe que dans le cas d'une grille-entretoise suivant l'art antérieur. Cependant, les techniques actuelles de soudage, par exemple au laser, permettent de réaliser cette opération sans trop de difficultés.

L'invention ne se limite pas aux modes de réalisation qui ont été décrits.

On peut envisager l'utilisation d'éléments complémentaires de déflexion du flux d'eau de refroidissement disposés suivant le bord supérieur des parois de cellules, dans des zones qui ne sont pas occupées par des ailettes de mélange, d'un type différent de ceux qui ont été décrits, ces ailettes complémentaires ayant une forme et une disposition permettant de combiner leur action sur le flux d'eau de refroidissement avec celle des ailettes de mélange habituelles. En particulier, les ailettes complémentaires doivent être repliées dans le même sens que les ailettes de mélange situées sur le même bord de paroi ou encore dans le prolongement de la paroi verticale de cellule.

L'invention s'applique à toute grille-entretoise d'un réacteur nucléaire refroidi par de l'eau comportant des ailettes de mélange conforme à l'objet des revendications.

## Revendications

1. Grille-entretoise pour un assemblage de combustible d'un réacteur nucléaire refroidi par de l'eau, constituée par une pluralité de plaquettes (2, 2') entrecroisées et assemblées entre elles sensiblement à angles droits, délimitant un réseau de cellules de crayons (3) à mailles carrées destinées à recevoir chacune un crayon (4) de combustible traversant la cellule dans une direction axiale et maintenu dans une disposition sensiblement centrée par des éléments de retenue (5) en saillie vers l'intérieur par rapport aux parois de la cellule (3), chaque cellule de crayon (3) de la grille-entretoise (1) comportant une première extrémité axiale inférieure et une seconde extrémité axiale supérieure dans le sens de circulation de l'eau de refroidissement dans l'assemblage de combustible, et deux parois opposées l'une à l'autre présentant sur leurs bords supérieurs une ailette de mélange (7, 8, 9, 10) constituée par une partie de paroi découpée en saillie vers le haut, par rapport au bord supérieur et repliée vers l'intérieur de la cellule (3), au voisinage d'un premier et d'un second angles de la cellule (3) disposés suivant une première diagonale de la cellule (3), les deux autres parois opposées de la cellule comportant, au voisinage de deux angles disposés sur une seconde diagonale de la cellule (3), deux ailettes (8) repliées vers l'extérieur de la cellule de crayon (3), **caractérisée par en ce que** les parois des cellules de crayons (3) comportent, suivant chacun de leurs bords supérieurs, dans une zone ne comportant pas d'ailettes de mélange (7), un élément complémentaire de déflexion (16, 17, 18) découpé dans la matière de la paroi de la cellule (3) et placé dans l'une des dispositions suivantes : a) dans le prolongement vertical de la paroi de la cellule (3), b) replié vers l'intérieur ou l'extérieur de la cellule dans le même sens que l'ailette de mélange (7) située sur le même bord supérieur d'une paroi de la cellule.

2. Grille-entretoise suivant la revendication 1, dans laquelle l'élément complémentaire de déflexion est constitué par une ailette droite en saillie au-dessus du bord supérieur de la paroi de cellule (3) et disposée dans le prolongement vertical de la paroi, une ailette de mélange repliée (7, 8, 9 et 10) venant s'appuyer par un bord externe sur une face parallèle à la paroi de cellule (3) de l'ailette droite (16), de manière à constituer un dièdre dans une zone d'angle de la cellule (3).

3. Grille-entretoise suivant la revendication 2, dans laquelle l'ailette supplémentaire (16) présente une forme triangulaire ou trapézoïdale et comporte un bord oblique par rapport à la direction axiale, le long duquel vient s'appuyer une ailette de mélange repliée (7, 8, 9, 10).

4. Grille-entretoise selon la revendication 1, dans laquelle les parois de chacune des cellules de crayons (3) comportent, suivant leurs bords supérieurs comprenant une ailette de mélange (7) repliée vers la cellule de crayon (3), un élément de déflexion complémentaire (17) découpé dans la matière de la paroi de la cellule (3), dans une zone du bord ne comportant pas d'ailette de mélange (7) repliée vers la cellule et constitué par un volet de guidage (17) de l'eau de refroidissement replié vers l'intérieur de la cellule de crayon (3) et suivant leurs bords comprenant une ailette de mélange (8) repliée vers une cellule voisine de la cellule de crayon (3), un volet de guidage (18) replié vers la cellule voisine.

5. Grille-entretoise suivant la revendication 3, dans laquelle chacune des cellules de crayon (3) comporte deux parois opposées parallèles ayant chacune une partie d'angle (17) située sur une première diagonale de la cellule de crayon (3) repliée vers l'intérieur de la cellule pour constituer un volet de guidage (17), les deux autres parois opposées de la cellule comportant des parties d'angle (18) situées sur la seconde diagonale de la cellule, repliées vers l'extérieur au-dessus de cellules de crayon voisines de la cellule de crayon (3).

6. Grille-entretoise suivant l'une quelconque des revendications 4 et 5, dans laquelle le volet (17) se trouve en amont, dans le sens de circulation de l'eau de refroidissement, de l'ailette de mélange (7) située sur le même bord supérieur de paroi de la cellule de crayon (3), et incliné de manière à diriger l'eau de refroidissement vers l'ailette de mélange (7).

## Claims

1. Spacer grid for a fuel assembly of a water-cooled nuclear reactor, consisting of a plurality of grid-straps (2, 2') interlaced and assembled to each other substantially at right angles, delimiting a network of rod cells (3) with a square lattice, each one intended to receive a fuel rod (4) passing through the cell in an axial direction and held in an arrangement which is substantially centred by retaining elements (5) projecting towards the inside with respect to the walls of the cell (3), each rod cell (3) of the spacer grid (1) comprising a first lower axial end and a second upper axial end in the direction of flow of the coolant through the fuel assembly, and two walls opposite each other having, on their upper edges, a mixing vane (7, 8, 9, 10) consisting of a wall part cut so as to project upwards, with respect to the upper edge and bent towards the inside of the cell (3), in the vicinity of a first and a second corner of the cell (3) arranged along a first diagonal of the cell (3), the other two opposite walls of the cell comprising, in the vicinity of two corners arranged on a second diagonal of the cell (3), two vanes (8) bent towards the outside of the rod cell (3), in which the walls of the rod cells (3) comprise, along each of their upper edges, in a region not comprising mixing vanes (7), an additional deflecting element (16, 17, 18) cut in the material of the wall of the cell (3) and placed in one of the following arrangements: a) in the vertical extension of the wall of the cell (3), b) bent towards the inside or the outside of the cell in the same direction as the other mixing vane (7) located on the same upper edge of a wall of the cell.

2. Spacer grid according to Claim 1, in which the additional deflecting element consists of a straight vane projecting above the upper edge of the wall of the cell (3) and arranged in the vertical extension of the wall, a bent mixing vane (7, 8, 9 and 10) leaning, by an outer edge, against a face parallel to the wall of the cell (3) of the straight vane (16), so as to form a dihedron in a corner region of the cell (3).

3. Spacer grid according to Claim 2, in which the additional vane (16) has a triangular or trapezoidal shape and comprises an edge which slants with respect to the axial direction, along which a bent mixing vane (7, 8, 9, 10) leans.

4. Spacer grid according to Claim 1, in which the walls of each of the rod cells (3) comprise, along their upper edges comprising a mixing vane (7) bent towards the rod cell (3), an additional deflecting element (17) cut in the material of the wall of the cell (3), in a region of the edge not comprising a mixing vane (7) bent towards the cell and consisting of a coolant guide louvre (17) bent towards the inside of the rod cell (3) and along their edges comprising a mixing vane (8) bent towards a cell adjacent to the rod cell (3), a guide louvre (18) bent towards the adjacent cell.

5. Spacer grid according to Claim 3, in which each of the rod cells (3) comprises two opposite parallel walls each having a corner part (17) located on a first diagonal of the rod cell (3) bent towards the inside of the cell in order to form a guide louvre (17), the two other opposite walls of the cell comprising corner parts (18) located on the second diagonal of the cell, and bent towards the outside above the rod cells adjacent to the rod cell (3).

6. Spacer grid according to either of Claims 4 and 5, in which the louvre (17) is upstream, in the direction of flow of the coolant, of the mixing vane (7) located on the same upper edge of the wall of the rod cell (3), and inclined so as to direct the coolant towards the mixing vane (7).

## Patentansprüche

1. Abstandsgitter für Brennstabbündel eines wassergekühlten Kernreaktors, gebildet durch eine Vielzahl sich überkreuzender und im Wesentlichen rechtwinklig zueinander zusammengebauter Platten (2, 2'), ein Gitter aus quadratischen Kembrennstabzellen (3) abgrenzend, von denen jede dazu dient, einen Kembrennstab (4) aufzunehmen, der die Zelle in einer axialen Richtung durchquert, durch in Bezug auf die Wände der Zelle (3) vorstehende Halteelemente (5) in einer im Wesentlichen zentrierten Stellung gehalten, wobei jede Brennstabzelle (3) des Abstandsgitters (1) in Fließrichtung des Kühlwassers in dem Brennstabbündel ein erstes unteres axiales Ende und ein zweites oberes axiales Ende und zwei sich gegenüberstehende Wände umfasst, die an ihren oberen Enden einen Mischflügel (7, 8, 9, 10) aufweisen, gebildet durch einen über das obere Ende hinausragenden und in Richtung Innenseite der Zelle (3) gebogenen Wandteil in der Nähe einer ersten und einer zweiten Ecke der Zelle (3), angeordnet entsprechend einer ersten Diagonalen der Zelle (3), und die beiden anderen sich gegenüberstehenden Wände der Zelle in der Nähe von zwei einer zweiten Diagonalen der Zelle (3) entsprechenden Ecken zwei in Richtung Außenseite der Zelle (3) umgebogene Flügel (8) umfassen,
**dadurch gekennzeichnet, dass** die Wände der Brennstabzellen (3) an jedem ihrer oberen Ränder, in einer Zone, die keine Mischflügel (7) umfasst, ein komplementäres, aus einem Stück mit der Wand der Zelle (3) aus dem Material herausgeschnittenes Ablenkelement (16, 17, 18) umfasst, das eine der folgenden Anordnungen aufweist: a) in der vertikalen Verlängerung der Wand der Zelle (3), b) umgebogen in Richtung Innenseite oder Außenseite der Zelle, in derselben Richtung wie der Mischflügel (7), der sich auf demselben oberen Rand einer Wand der Zelle befindet.

2. Abstandsgitter nach Anspruch 1, bei dem das zusätzliche Ablenkelement durch einen über das obere Ende der Wand der Zelle (3) hinausragenden und in der vertikalen Verlängerung der Wand angeordneten geraden Flügel gebildet wird, wobei ein umgebogener Mischflügel (7, 8, 9, 10) sich mit einem Außenrand auf einer zur Wand der Zelle (3) parallelen Fläche des geraden Flügels (16) abstützt, um in einer Eckenzone der Zelle (3) einen V-Winkel zu bilden.

3. Abstandsgitter nach Anspruch 2, bei dem der zusätzliche Flügel (16) dreieck- oder trapezförmig ist und einen in Bezug auf die axiale Richtung schrägen Rand umfasst, längs dem sich ein umgebogener Mischflügel (7, 8, 9, 10) abstützt.

4. Abstandsgitter nach Anspruch 1, bei dem die Wände jeder der Brennstabzellen (3), wenn ihre oberen Rändern einen in Richtung Innenseite der Zelle (3) umgebogenen Mischflügel (7) aufweisen, ein komplementäres, aus einem Stück mit der Wand der Zelle (3) aus dem Material herausgeschnittenes Ablenkelement (17) umfassen, in einer Zone des Rands, die keinen in Richtung Zelle umgebogenen Mischflügel (7) aufweist und gebildet durch einen in Richtung Innenseite der Brennstabzelle (3) gebogenen Kühlwasser-Lenkflügel (17), und, wenn ihre Rändern einen in Richtung einer der Zelle (3) benachbarten Zelle umgebogenen Mischflügel (8) aufweisen, einen in Richtung der benachbarten Zelle gebogenen Lenkflügel (18) umfassen.

5. Abstandsgitter nach Anspruch 3, bei dem jede der Brennstabzellen (3) zwei parallele entgegengesetzte Wände umfasst, von denen jede einen Eckenteil (17) aufweist, entsprechend einer ersten Diagonalen der Brennstabzelle (3) angeordnet und in Richtung Innenseite der Zelle gebogen, um einen Lenkflügel (17) zu bilden, wobei die beiden anderen entgegengesetzten Wände der Zelle Eckenteile (18) umfassen, entsprechend der zweiten Diagonalen der Zelle angeordnet und nach außen gebogen über der Brennstabzelle (3) benachbarten Brennstabzellen.

6. Abstandsgitter nach einem der Ansprüche 4 und 5, bei dem der Lenkflügel (17) sich, in Fließrichtung des Kühlwassers, oberhalb des auf demselben oberen Rand der Wand der Brennstabzelle (3) angeordneten Mischflügels (7) befindet und so geneigt ist, dass er das Kühlwasser in Richtung Mischflügel (7) lenkt.
